# FASCICULE DE BREVET EUROPEEN

(11) **EP 1 170 153 B1**
(45) Date de publication et mention de la délivrance du brevet: **28.12.2005**
(21) Numéro de dépôt: 01114461.5
(22) Date de dépôt: 15.06.2001
(51) Int. Cl.: B60C 11/12

(54) **Bande de roulement pour pneumatique portant de lourdes charges**
Luftreifen mit einer Lauffläche für schwere Lasten
Tread for pneumatic tire carrying heavy loads

(30) Priorité: 03.07.2000 FR 0008650
(43) Date de publication de la demande: 09.01.2002
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: Merino Lopez, José, 63200 Riom (FR)
(74) Mandataire: Diernaz, Christian

(56) Documents cités:
- EP-A- 0 989 000
- FR-A- 2 763 892
- DATABASE WPI Section Ch, Week 200061 Derwent Publications Ltd., London, GB; Class A95, AN 2000-631888 XP002161593 -& JP 2000 238514 A (BRIDGESTONE CORP), 5 septembre 2000 (2000-09-05)
- PATENT ABSTRACTS OF JAPAN vol. 014, no. 486 (M-1038), 23 octobre 1990 (1990-10-23) -& JP 02 197402 A (OHTSU TIRE & RUBBER CO LTD:THE), 6 août 1990 (1990-08-06)
- PATENT ABSTRACTS OF JAPAN vol. 2000, no. 07, 29 septembre 2000 (2000-09-29) -& JP 2000 094908 A (BRIDGESTONE CORP), 4 avril 2000 (2000-04-04)

## Description

L'invention concerne les pneumatiques et les bandes de roulement pour pneumatiques de véhicules destinés à porter de fortes charges et en particulier les sculptures de telles bandes pourvues d'incisions.

Pour améliorer la tenue de route d'un véhicule en roulage notamment sur chaussée mouillée ou verglacée, il est nécessaire d'avoir une adhérence suffisante des bandes de roulement des pneumatiques équipant ce véhicule. Dans ce but, il est connu de pourvoir la bande de roulement de chaque pneumatique avec des motifs de relief délimités par des découpures (rainures et ou incisions), ces découpures ayant, entre autres, la fonction de servir de canaux d'évacuation. Chaque motif peut en outre comporter au moins une incision afin de créer un plus grand nombre d'arêtes destinées à couper la couche d'eau recouvrant la chaussée. Par découpure, il faut entendre une fente qui peut présenter un tracé rectiligne ou autre, par exemple curviligne, ondulé, quel que soit le plan de coupe (longitudinal, transversal ou oblique) considéré.

Bien entendu, il faut établir un nécessaire compromis entre le nombre de découpures et les rigidités de la bande de roulement; en effet, un trop grand nombre de découpures (rainures et/ou incisions) conduit à une diminution sensible des rigidités des motifs de reliefs. En particulier, sous l'action d'efforts tangentiels à la surface de contact du pneumatique avec la chaussée notamment en virage, les motifs peuvent se déformer d'une manière trop importante, ce qui se traduit alors par une perte de tenue de route (ou tenue de cap).

Pour résoudre ce problème, il a été proposé de réaliser des incisions dont les parois en vis-à-vis sont pourvues de moyens agencés pour limiter les mouvements relatifs d'une paroi par rapport à la paroi en vis-à-vis.

Par exemple, dans le document FR 2 025 124 il est proposé de réaliser des incisions dont les surfaces de parois principales en vis-à-vis délimitant lesdites incisions présentent un relief tout en restant sensiblement parallèles entre elles, quel que soit le tracé obtenu sur tout plan de coupe.

Par ailleurs, le document US 5 783 002 décrit une bande de roulement selon le préambule de la revendication 1, permettant d'obtenir des propriétés optimales des éléments de relief de cette bande tout au long de la durée d'utilisation du pneumatique équipé avec la bande de roulement. Cette bande de roulement comporte au moins une incision délimitée par deux parois se faisant face et présentant chacune une surface en relief formée de saillies et de cavités disposées d'une manière particulière de part et d'autre d'une surface moyenne de paroi, lesdites saillies d'une paroi étant prévues pour coopérer, par imbrication, avec les cavités de la paroi en vis-à-vis et réciproquement.

Les solutions décrites dans ces documents se révèlent être très performantes pour des pneumatiques destinés à des véhicules de tourisme ou plus généralement des véhicules supportant des charges relativement faibles. Toutefois, on a pu constater que lorsque ces mêmes solutions étaient appliquées au cas de pneumatiques pour véhicules portant de lourdes charges - notamment des véhicules poids lourd - les charges supportées par les différents pneumatiques créaient des pressions élevées de contact et donc des pressions élevées d'écrasement des motifs de relief des bandes de roulement. Sous ces pressions de contact, le mélange de caoutchouc composant chacun des motifs de relief de la bande de roulement est écrasé et tend, par effet dit de Poisson, à se déformer dans toutes les directions libres transversales par rapport à la direction des pressions de contact, c'est-à-dire dans les directions selon lesquelles ledit mélange n'est pas limité matériellement. Sous cet effet résultant de la compression, on observe que les saillies et cavités dont est pourvue une première paroi principale délimitant une incision avec une seconde paroi principale en vis-à-vis ne peuvent coopérer avec l'ensemble des saillies et cavités de ladite seconde paroi, chacune desdites parois principales se déformant au cours de l'écrasement de la bande de roulement d'une manière non homogène (non régulière). En fait, on observe que seules certaines parties des parois de l'incision viennent en contact et assurent la fonction de blocage desdites parois l'une contre l'autre (ces parties en contact correspondent aux parties où la déformation par effet de Poisson est maximale). On constate, en outre, que la déformation par effet Poisson est modifiée au voisinage des points de contact avec la chaussée selon les conditions de contact (glissement possible ou non entre la surface de contact de la bande de roulement et la chaussée).

Un objectif de la présente invention est de former une bande de roulement pour pneumatique destiné à supporter des charges élevées et comportant des incisions ne présentant pas les inconvénients qui viennent d'être rappelés.

Dans ce but, la bande de roulement selon l'invention réalisée dans un matériau de nature caoutchouteuse comporte au moins une incision délimitée par des parois en vis-à-vis (c'est-à-dire se faisant face), chaque paroi étant définie géométriquement par une surface moyenne portant des éléments de relief, les éléments de relief (saillies, cavités) d'une paroi étant destinés à coopérer avec les éléments de relief de la paroi en vis-à-vis dans le contact de la bande de roulement avec la chaussée.

Pour atteindre une coopération plus efficace des parois d'une incision délimitée par deux parois pourvues d'éléments de relief (creux et saillies), la largeur de l'incision - c'est-à-dire la distance séparant les parois (3, 4) mesurée parallèlement à la surface de roulement (11) à l'état neuf - n'est pas constante dans toutes les directions et est variable au moins dans la direction de la profondeur de l'incision. Plus spécifiquement, la largeur de l'incision selon l'invention est maximale dans la région centrale de l'incision, c'est à dire dans la région qui est sensiblement à égale distance de la surface de roulement et du fond de l'incision et à égale distance des extrémités latérales de ladite incision, cette région subissant les déformations maximales dues à l'effet de Poisson résultant de l'écrasement de la bande de roulement dans le contact avec la chaussée.

De cette façon, la coopération des parois en vis-à-vis d'une incision est plus efficace puisque l'ensemble des motifs de relief sur une paroi coopère avec l'ensemble des motifs de relief de la paroi en vis-à-vis, la différence de largeur d'incision étant compensée par la déformation transverse du mélange de caoutchouc lors de l'écrasement de la bande de roulement.

Dans une première variante simple de réalisation, les variations de la largeur de l'incision selon l'invention sont sensiblement identiques quel que soit le plan de coupe perpendiculaire à la surface de roulement de la bande de roulement et sensiblement perpendiculaire à la surface moyenne de ladite incision (définie comme la surface passant à mi distance des parois en vis-à-vis délimitant l'incision).

Préférentiellement, la largeur maximale de l'incision est localisée sensiblement à une profondeur supérieure ou égale à la moitié de la profondeur de ladite incision.

Dans une autre variante de réalisation, les courbes d'iso-largeur de l'incision sont curvilignes et concentriques autour d'une région centrale du motif de l'incision, ladite région centrale étant située sensiblement à mi profondeur de l'incision et à égale distance des arêtes latérales formées par ladite incision. Par région centrale du motif de l'incision, on entend la région qui est sensiblement à égale distance de la surface de roulement et du fond de l'incision et à égale distance des extrémités latérales de ladite incision.

En pratique, si on déplace une surface de paroi d'un élément de mélange de caoutchouc délimitant une incision selon l'invention pour la plaquer contre la surface de paroi en vis-à-vis délimitant la même incision, on obtient :
- en dehors de la zone de contact de la bande avec la chaussée, un contact partiel, c'est-à-dire un contact uniquement sur les parties limitant lesdites surfaces (ces parties comprennent les arêtes formées par l'incisions sur lesdites parois);
- dans la zone de contact de la bande avec la chaussée, un contact total ou quasi total des surfaces de parois déformées dans les directions transversales par effet Poisson, ces déformations compensant localement les différences de largeur initiale de l'incision.

Il est ainsi possible d'améliorer sensiblement le blocage des parois en vis-à-vis d'une même incision lors de l'écrasement. Cela est particulièrement intéressant lorsque la bande de roulement est à l'état neuf puisque après une usure partielle de ladite bande, les incisions ont des profondeurs qui diminuent et qu'en conséquence le besoin de blocage des parois délimitant lesdites incisions diminue également.

La sculpture selon l'invention peut être appliquée au cas de pneumatique de tout type étant entendu que la répartition des largeurs d'une incision est fonction des déformations transversales dues à l'effet de Poisson au cours de l'écrasement des blocs de gomme de la bande de roulement dans le contact avec la chaussée.

Une incision selon l'invention est aisément réalisable par des moyens usuels comme par exemple l'emploi d'une lamelle présentant des géométries de surface et des répartition d'épaisseurs appropriées.

Les caractéristiques de l'invention ressortent de la description qui suit, faite en regard du dessin annexé et montrant, à titre d'exemples non limitatifs, des formes de réalisation de l'objet de l'invention.

Sur ce dessin,
- la figure 1 montre une vue perspective d'une incision selon l'invention dans une bande de roulement,
- la figure 2 montre une vue en coupe dans un plan de coupe II-II perpendiculaire à la surface de roulement de la bande de roulement montrée à la figure 1;
- la figure 3 montre une vue en coupe dans un plan de coupe III-III perpendiculaire à la surface de roulement de la bande de roulement montrée à la figure 1;
- la figure 4 montre une répartition des courbes d'iso-largeur d'une autre variante d'incision selon l'invention;
- la figure 5 montre une autre répartition des courbes d'iso largeur d'une autre variante d'incision selon l'invention.

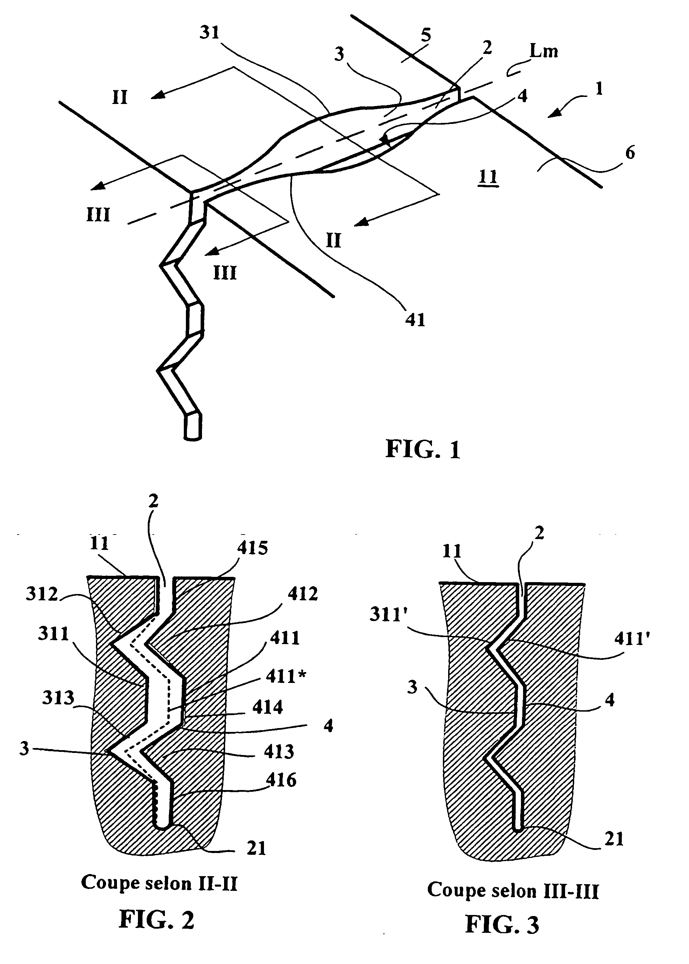

La figure 1 montre une partie d'une bande de roulement 1 pour un pneumatique équipant un véhicule poids-lourd et pourvue d'une incision 2 selon l'invention (la configuration présentée correspond à la bande hors de la zone de contact avec la chaussée c'est-à-dire non écrasée). L'incision 2 représentée est délimitée par des parois 3, 4 en vis-à-vis de deux blocs de gomme 5, 6 et a une forme générale rectiligne sur ladite surface de roulement 1 et une forme générale en zigzag dans l'épaisseur de la bande. Les parois 3, 4 délimitant l'incision 2 sont pourvues de parties en saillies et de parties en creux destinées à coopérer lorsque les blocs de gomme 5, 6 passent dans le contact avec la chaussée et que l'incision se referme (c'est-à-dire lorsque les parois 3, 4 se rapprochent l'une de l'autre).

L'incision 2 présente sur la surface de roulement 11 de la bande de roulement à l'état neuf une largeur variable dans le sens de sa longueur et maximale dans sa partie médiane.

Pour compenser l'effet, dit de Poisson, occasionnant une déformation des blocs de gomme 5, 6 délimitant l'incision 2, ladite incision coupe la surface de roulement 11 pour former deux arêtes 31 et 41 dont les tracés sont sensiblement symétriques par rapport à une ligne moyenne rectiligne Lm représentée en traits pointillés et présentent un écartement maximal dans la partie médiane de la longueur de l'incision (mesurée suivant Lm).

La figure 2 montre une coupe selon un plan II-II de la bande non écrasée visible à la figure 1. Sur ce plan de coupe réalisé sensiblement dans la partie médiane de l'incision 2 et perpendiculairement à la surface de roulement 11, on voit que cette incision 2 est délimitée par deux surfaces 3, 4 dont les traces 311, 411 sur le plan de coupe ne sont pas superposables, c'est-à-dire que le rapprochement de la surface 4 vers la surface 3 ne permet pas de les superposer en totalité (la trace 411* en traits pointillés montre un tel rapprochement) et qu'il reste entre la trace 311 et la trace 411* un espace prévu pour être compensé par la déformation des blocs de gomme 5, 6 résultant de l'effet de Poisson dans le contact avec la chaussée.

Sur la paroi 4 on distingue la présence de deux saillies 412, 413 espacés dans le sens de la profondeur de l'incision par une partie 414 sensiblement perpendiculaire à la surface de roulement 11, lesdites deux saillies 412, 413 étant prolongées respectivement vers l'extérieur de la bande de roulement et vers le fond de l'incision également par des parties 415, 416 perpendiculaires à la surface de roulement 11. La paroi 3 comporte deux cavités 312, 313 destinées à coopérer avec les saillies 412, 413 de la paroi 4 lorsque la bande est écrasée.

La largeur de l'incision 2 prise dans le plan de coupe II-II et mesurée parallèlement à la surface de roulement 11 est maximale à mi profondeur entre la surface de roulement 1 à l'état neuf et le fond de l'incision 21.

Sur la figure 3, montrant une coupe selon un plan III-III réalisé sur la bande de roulement 1 de la figure 1 au voisinage de l'une des extrémités latérales de l'incision, on voit que les profils moyens des traces 311' et 411' des surfaces de parois 3 et 4 délimitant l'incision sont d'une manière générale semblables aux profils moyens des traces 311 et 411 des mêmes surfaces de parois 3 et 4 dans le plan de coupe II-II montrés à la figure 2. Toutefois, la largeur de l'incision 2, mesurée entre les traces des parois 3 et 4 dans le plan III-III est sensiblement constante sur toute la profondeur de l'incision 2 et est inférieure à la plus petite des largeurs de la même incision mesurées sur le plan de coupe II-II.

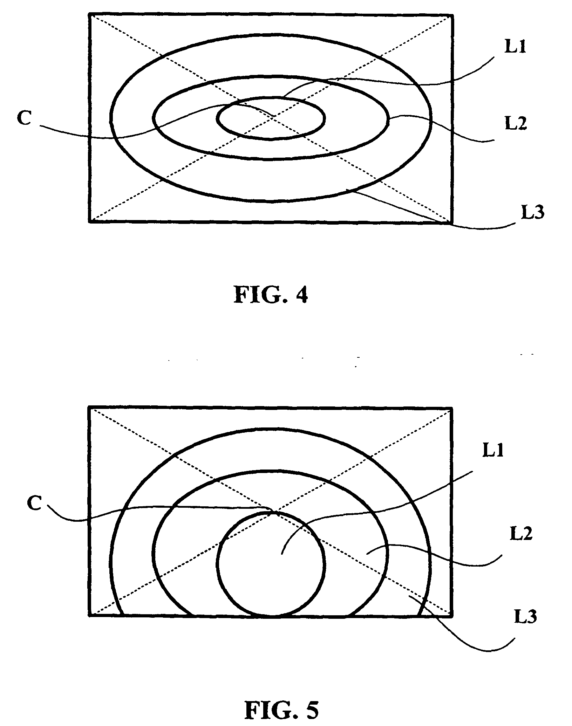

De façon préférentielle, on réalise une incision délimitée par des parois de mélange de caoutchouc dont les espacements (distances en tout point séparant lesdites parois) suivent une répartition schématisée sur la figure 4. Sur cette figure 4, on a porté les lignes de même largeur (ou iso largeur) d'une incision sur la surface moyenne de ladite incision : afin d'obtenir un effet optimal de coopération d'une paroi avec la paroi en vis-à-vis délimitant une incision lors du passage dans le contact avec la chaussée, il est judicieux que les lignes d'iso-largeur soient sensiblement centrées et que les plus grandes largeurs soient situées près de la partie centrale C de l'incision. Par partie centrale C d'une incision, il faut entendre ici la partie de l'incision qui se trouve environ à mi profondeur de ladite incision et à égale distance des extrémités latérales de cette incision (c'est-à-dire là où les déformations transversales - dans une direction perpendiculaire aux parois délimitant l'incision - résultant de l'effet de Poisson par compression sont maximales).

Dans un exemple d'application de la répartition visible sur cette figure 4 au cas d'une bande de roulement pour pneumatique destiné à équiper un véhicule poids lourd, les lignes L1 représentent une largeur de 3.5 mm, L2 de 1.5 mm et L3 de 1 mm; sur les bords de l'incision la largeur de l'incision est inférieure ou égale à 0.5 mm.

Dans une autre variante, les courbes d'iso-largeur L1, L2, L3 de la figure 4 sont toutes translatées d'une même quantité vers le fond de l'incision comme représenté sur la figure 5.

Comme nous l'avons décrit, l'effet de Poisson est une fonction de la force de compression supportée par les éléments de gomme formant la bande de roulement et en conséquence, il est du domaine de l'homme du métier d'ajuster les largeurs de l'incision selon l'invention en fonction du type de pneumatique, de la pression de gonflage utilisée, du nombre d'incisions et de la profondeur desdites incisions et des caractéristiques mécaniques des mélanges de caoutchouc.

Bien entendu l'invention n'est pas limitée aux exemples décrits et représentés et diverses modifications peuvent y être apportées sans sortir de son cadre, tel que défini par les revendications.

## Revendications

1. Bande de roulement (1) pour pneumatique portant de lourdes charges, cette bande étant réalisée en mélange de caoutchouc et comportant au moins une incision (2), cette incision étant délimitée par des parois (3, 4) en vis-à-vis, chaque paroi étant définie géométriquement par une surface moyenne portant des éléments de relief en creux ou/et en saillie, les éléments de relief d'une paroi étant destinés à coopérer avec les éléments de relief de la paroi en vis-à-vis dans le contact de la bande de roulement avec la chaussée, cette bande de roulement étant **caractérisée en ce que :**
la largeur de l'incision (2) - c'est-à-dire la distance séparant les parois (3, 4) mesurée parallèlement à la surface de roulement (11) à l'état neuf - est variable et est maximale dans la région centrale de l'incision, c'est-à-dire dans la région qui est sensiblement à égale distance de la surface de roulement et du fond de l'incision et à égale distance des extrémités latérales de ladite incision, cette région subissant les déformations maximales dues à l'effet de Poisson résultant de l'écrasement de ladite bande dans le contact avec la chaussée, afin d'obtenir, sur toute la surface des parois délimitant ladite incision, une coopération de tous les motifs de relief desdites parois (3, 4).

2. Bande de roulement (1) selon la revendication 1 **caractérisée en ce que** les variations de la largeur de l'incision (2) sont sensiblement identiques quel que soit le plan de coupe perpendiculaire à la surface de roulement (11) de la bande de roulement.

3. Bande de roulement (1) selon la revendication 1 **caractérisée en ce que** les courbes d'iso largeur (L1, L2, L3) de l'incision (2) sont sensiblement curvilignes et concentriques.

4. Bande de roulement (1) selon la revendication 3 **caractérisée en ce que** les courbes d'iso largeur (L1, L2, L3) de l'incision (2) sont sensiblement concentriques autour d'une région centrale de l'incision, ladite région centrale étant située sensiblement à mi profondeur de l'incision et à égale distance des arêtes latérales formées par ladite incision.

## Patentansprüche

1. Laufstreifen (1) für Luftreifen, die schwere Lasten tragen, wobei der Laufstreifen aus einer Kautschukmischung hergestellt ist und mindestens einen Schnitt (2) aufweist, wobei der Schnitt durch gegenüberliegende Wände (3, 4) begrenzt ist, wobei jede Wand geometrisch durch eine mittlere Oberfläche definiert ist, die zurückspringende und/ oder vorspringende Reliefelemente aufweist, wobei die Reliefelemente einer Wand mit den Reliefelementen der gegenüberliegenden Wand beim Kontakt des Laufstreifens mit der Fahrbahn zusammenwirken sollen, wobei der Laufstreifen **dadurch gekennzeichnet ist, dass**: die Breite des Schnitts (2) ― d.h. der Abstand, der die Wände (3, 4) trennt und der parallel zur Lauffläche (11) im Neuzustand gemessen wird ― veränderlich ist und im mittleren Bereich des Einschnitts maximal ist, d.h. in dem Bereich, der von der Lauffläche und dem Boden des Einschnitts in etwa gleich beabstandet ist und den gleichen Abstand von den seitlichen Enden des Einschnitts aufweist, wobei dieser Bereich aufgrund des Poisson-Effekts, der aus dem Stauchen des Laufstreifens in Kontakt mit der Fahrbahn resultiert, den größten Deformationen ausgesetzt ist, damit auf der gesamten Fläche der Wände, die den Schnitt begrenzen, alle Reliefeinheiten der Wände (3, 4) zusammenwirken.

2. Laufstreifen (1) nach Anspruch 1, **dadurch gekennzeichnet, dass** die Änderungen der Breite des Schnitts (2) unabhängig von der Schnittebene senkrecht zur Lauffläche (11) des Laufstreifens in etwa identisch sind.

3. Laufstreifen (1) nach Anspruch 1, **dadurch gekennzeichnet, dass** die Schnittlinien gleicher Breite (L1, L2, L3) des Einschnitts (2) in etwa krummlinig und konzentrisch sind.

4. Laufstreifen (1) nach Anspruch 3, **dadurch gekennzeichnet, dass** die Kurven gleicher Breite (L1, L2, L3) des Einschnitts (2) um einen zentralen Bereich des Einschnitts in etwa konzentrisch sind, wobei sich der zentrale Bereich in etwa auf halber Höhe des Einschnitts und in gleichem Abstand zu den durch den Einschnitt gebildeten seitlichen Kanten befindet.

## Claims

1. A tread (1) for a tyre bearing heavy loads, this tread being made of a rubber mix and comprising at least one incision (2), this incision being defined by opposing walls (3, 4), each wall being defined geometrically by an average surface bearing hollowed and/or protruding elements in relief, the elements in relief of one wall being intended to cooperate with the elements in relief of the facing wall in the contact of the tread with the roadway, this tread being **characterised in that**:
the width of the incision (2) - that is to say, the distance between the walls (3, 4) measured parallel to the running surface (11) when new - is variable and is at a maximum in the central region of the incision, that is to say in the region which is substantially at an equal distance from the running surface and from the bottom of the incision and at an equal distance from the lateral ends of said incision, this region which undergoes the maximum deformation due to the Poisson effect resulting from the loading of said tread in the contact with the roadway, in order to obtain, over the entire surface of the walls defining said incision, cooperation of all the motifs in relief of said walls (3, 4).

2. A tread (1) according to Claim 1, **characterised in that** the variations in the width of the incision (2) are substantially identical whatever the section plane perpendicular to the running surface (11) of the tread.

3. A tread (1) according to Claim 1, **characterised in that** the curves of iso-width (L1, L2, L3) of the incision (2) are substantially curvilinear and concentric.

4. A tread (1) according to Claim 3, **characterised in that** the curves of iso-width (L1, L2, L3) of the incision (2) are substantially concentric about a central region of the incision, said central region being located substantially at half the depth of the incision and at equal distance from the lateral ridges formed by said incision.
